(19) Europäisches Patentamt
European Patent Office
Office européen des brevets

(11) EP 4 400 538 A1

(12) EUROPEAN PATENT APPLICATION
published in accordance with Art. 153(4) EPC

(43) Date of publication:
17.07.2024 Bulletin 2024/29

(51) International Patent Classification (IPC):
C08J 9/18 $^{(2006.01)}$

(21) Application number: 22883263.0

(52) Cooperative Patent Classification (CPC):
C08J 9/18

(22) Date of filing: 13.09.2022

(86) International application number:
PCT/JP2022/034281

(87) International publication number:
WO 2023/067953 (27.04.2023 Gazette 2023/17)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 21.10.2021 JP 2021172502

(71) Applicant: JSP Corporation
Tokyo 100-0005 (JP)

(72) Inventors:
• HIRA Akinobu
Yokkaichi-shi, Mie 510-0881 (JP)
• NOHARA Tokunobu
Yokkaichi-shi, Mie 510-0881 (JP)
• HAYASHI Tatsuya
Yokkaichi-shi, Mie 510-0881 (JP)

(74) Representative: Kramer Barske Schmidtchen
Patentanwälte PartG mbB
European Patent Attorneys
Landsberger Strasse 300
80687 München (DE)

(54) **POLYETHYLENE RESIN FOAM PARTICLES, AND METHOD FOR PRODUCING SAME**

(57) Disclosed herein is a polyethylene-based resin expanded bead comprising non-crosslinked linear low-density polyethylene as a base resin. The density, heat of fusion, melting point, and melt flow rate measured under conditions of a temperature of 190°C and a load of 2.16 kg of the linear low-density polyethylene fall within their respective predetermined ranges. The average cell diameter of the expanded beads is 50 μm or more and 180 μm or less.

FIG. 1

EP 4 400 538 A1

**Description**

TECHNICAL FIELD

The present invention relates to a polyethylene-based resin expanded bead and a method for producing the same.

BACKGROUND ART

Polyethylene-based resin expanded beads molded articles are excellent in formability and shock absorbability and are thus widely used as shock-absorbing packing materials. Polyethylene-based resin expanded beads molded articles are suitable particularly for electric/electronic device packing materials because they have a property of being less likely to scratch objects to be packaged. Such an expanded beads molded article is obtained by, for example, in-mold molding in which polyethylene-based resin expanded beads are secondarily expanded in a mold while being fusion-bonded together by melting their surfaces.

Polyethylene-based resin expanded beads conventionally used are cross-linked polyethylene-based resin expanded beads obtained by cross-linking low-density polyethylene and then expanding a resultant. However, a cross-linked polyethylene-based resin is more disadvantageous than non-crosslinked polyethylene from the viewpoint of recyclability because its recycling method is significantly limited. On the other hand, expanded beads that can be subjected to in-mold molding even when non-crosslinked are easily obtained from linear low-density polyethylene. Therefore, non-crosslinked expanded beads using linear low-density polyethylene as a base resin have come to be studied (see Patent Literatures 1 to 5).

PRIOR ART LITERATURES

Patent Literatures

Patent Literature 1: JP-B-07-39501
Patent Literature 2: JP-A-06-192464
Patent Literature 3: WO 2013/031745 A1
Patent Literature 4: WO 2014/042189 A1
Patent Literature 5: WO 2015/076306 A1

SUMMARY OF INVENTION

PROBLEMS TO BE SOLVED BY INVENTION

In Patent Literatures 1 and 2, an organic physical blowing agent such as chlorofluorocarbon or butane is used as a blowing agent. In recent years, from the viewpoint of reducing environmental load, it is desirable to use inorganic physical blowing agents. In the case of Patent Literatures 1 and 2, it is difficult to stably produce expanded beads having a low apparent density when an inorganic physical blowing agent is used, and even when expanded beads having a low apparent density are obtained, moldability may deteriorate. In the case of Patent Literatures 3 and 4, molded articles have room for improvement in their flexibility because molded articles used as packing materials for precision devices and the like are required to have more excellent flexibility. Further, in the case of Patent Literatures 3 and 4, molded articles have room for improvement also in their surface smoothness. Also in the case of Patent Literature 5, a molded article has room for improvement in its flexibility, and further there is a room for improvement also in moldability.

It is an object of the present invention to provide an expanded bead that can be subjected to in-mold molding to produce an expanded beads molded article having high flexibility and excellent surface smoothness under excellent molding conditions and a method for producing the same.

MEANS FOR SOLVING PROBLEM

One aspect of the present invention is a polyethylene-based resin expanded bead containing:

non-crosslinked linear low-density polyethylene as a base resin, wherein
the linear low-density polyethylene has a density of 0.915 g/cm$^3$ or more and less than 0.930 g/cm$^3$,

the linear low-density polyethylene has a heat of fusion ΔH1 of 80 J/g or more and 100 J/g or less,
the linear low-density polyethylene has a melting point Tm of 120°C or higher and 130°C or lower,
the linear low-density polyethylene has a melt flow rate of 0.8 g/10 min or more and 1.5 g/10 min or less as measured under conditions of a temperature of 190°C and a load of 2.16 kg, and
an average cell diameter of the expanded beads is 50 μm or more and 180 μm or less.

Another aspect of the present invention is a method for producing a polyethylene-based resin expanded bead, the method comprising:

a dispersing step in which polyethylene-based resin particles using non-crosslinked linear low-density polyethylene as a base resin are dispersed in a dispersion medium in a sealed container;
a blowing agent impregnating step in which the resin particles are impregnated with an inorganic physical blowing agent in the sealed container; and
an expanding step in which the resin particles impregnated with the blowing agent are released from the sealed container into an atmosphere having a pressure lower than an internal pressure of the sealed container to expand the resin particles, wherein
the linear low-density polyethylene has a density of 0.915 g/cm$^3$ or more and less than 0.930 g/cm$^3$,
the linear low-density polyethylene has a heat of fusion of 80 J/g or more and 100 J/g or less,
the linear low-density polyethylene has a melting point of 120°C or higher and 130°C or lower, and
the linear low-density polyethylene has a melt flow rate of 0.8 g/10 min or more and 1.5 g/10 min or less as measured under conditions of a temperature of 190°C and a load of 2.16 kg.

EFFECTS OF INVENTION

The expanded bead makes it possible to produce an expanded beads molded article having high flexibility and excellent surface smoothness under excellent molding conditions. Further, the expanded bead can be produced using an inorganic physical blowing agent as a blowing agent. This makes it possible to avoid the use of an organic physical blowing agent and reduce environmental load.

BRIEF DESCRIPTION OF DRAWINGS

Fig. 1 is an explanatory diagram showing an example of a second DSC curve of linear low-density polyethylene.
Fig. 2 is an explanatory diagram showing a method for calculating the area of a high-temperature peak of expanded beads.
Fig. 3 is an explanatory diagram showing a relationship between the heat of fusion and the melting point of linear low-density polyethylene.

MODE FOR CARRYING OUT INVENTION

When an expression "X to Y" is herein used to express a numerical range by interposing "to" between numerical values or physical property values, the expression means "X or more and Y or less", and values of the end points X and Y are included in the numerical range. Further, when a numerical value or a physical property value is expressed as a lower limit, a value equal to or more than the numerical value or the physical property value is meant, and when a numerical value or a physical property value is expressed as an upper limit, a value equal to or less than the numerical value or the physical property value is meant. Further, "wt%" and "mass%" have substantially the same meaning, and "part(s) by weight" and "part(s) by mass" have substantially the same meaning. Herein, a polyethylene-based resin expanded bead is sometimes referred to as an "expanded bead", and an expanded beads molded article is sometimes referred to as a "molded article".
An expanded bead according to the present disclosure uses non-crosslinked linear low-density polyethylene as a base resin, and contains linear low-density polyethylene in a foamed state. The linear low-density polyethylene (PE-LLD) is a linear copolymer of ethylene and an α-olefin. The α-olefin constituting the copolymer usually has 4 to 10 carbon atoms. The linear low-density polyethylene is preferably a copolymer of ethylene and an α-olefin having 6 to 8 carbon atoms, more preferably a copolymer of ethylene and an α-olefin having 6 carbon atoms. In this case, it is possible to obtain an effect that the density, melting point, and heat of fusion of the linear low-density polyethylene are easily adjusted to fall within their respective ranges specified in the present disclosure.
Preferred examples of the linear low-density polyethylene include an ethylene-1-butene copolymer, an ethylene-1-pentene copolymer, an ethylene-1-hexene copolymer, an ethylene-4-methyl-1-pentene copolymer, and an ethylene-1-octene copolymer. It should be noted that a different monomer(s) from ethylene and the $\alpha$-olefin having 4 to 10 carbon atoms may be further copolymerized as a copolymer component of the linear low-density polyethylene without impairing the object and effects of the present disclosure, and the content of the different monomer(s) is preferably 5 mass% or less, more preferably 3 mass% or less, even more preferably 0, with respect to 100 mass% in total of ethylene, the $\alpha$-olefin having 4 to 10 carbon atoms , and the different monomer(s). The linear low-density polyethylene is preferably a random copolymer or a block copolymer, more preferably a random copolymer.

The linear low-density polyethylene as a base resin of the expanded bead may contain one type of linear low-density polyethylene or may contain two or more types of linear low-density polyethylenes. Further, at least one type of different polyethylene selected from the group consisting of very low-density polyethylene (PE-VLD), low-density polyethylene (PE-LD), middle-density polyethylene (PE-MD), and high-density polyethylene (PE-HD) may be contained. In this case, the values of physical properties, such as density, heat of fusion, melting point, and MFR, of the linear low-density polyethylene specified in the present disclosure are values determined using a mixed resin containing the different polyethylene(s) as a measurement sample. However, the content of the polyethylene(s) other than the linear low-density polyethylene in the base resin is preferably 30 mass% or less, more preferably 20 mass% or less, even more preferably 10 mass% or less, still even more preferably 5 mass% or less, particularly preferably 3 mass% or less, most preferably 0. That is, it is most preferred that the expanded bead contains only the linear low-density polyethylene as polyethylene. From the viewpoint of obtaining a molded article having excellent flexibility, it is preferred that the expanded bead does not contain high-density polyethylene.

The linear low-density polyethylene as a base resin of the expanded bead is non-crosslinked. From the viewpoint of excellent expandability and moldability, a conventional expanded bead uses cross-linked low-density polyethylene as a base resin. However, such an expanded bead using cross-linked low-density polyethylene as a base resin is difficult to be reused through resin recycling and therefore may put a load on the environment. On the other hand, the linear low-density polyethylene slowly changes in melt viscosity due to temperature change, and therefore can exhibit excellent expandability and moldability even when non-crosslinked. Further, the values of physical properties, such as density, heat of fusion, melting point, and melt flow rate, of the linear low-density polyethylene are within predetermined ranges specified in the present disclosure, which further improves expandability and moldability even when the linear low-density polyethylene is non-crosslinked. Therefore, the expanded bead according to the present disclosure using, as a base resin, the linear low-density polyethylene, which is non-crosslinked and has predetermined physical properties, exhibits excellent expandability and moldability while being recyclable as resin.

The "non-crosslinked" herein means that the content of insoluble matter obtained by a hot xylene extraction method in the expanded beads is 5 mass% or less. From the viewpoint of further facilitating recycling of the expanded beads and the viewpoint of further improving the flexibility of a resulting expanded beads molded article, the content of insoluble matter obtained by the hot xylene extraction method in the expanded beads is preferably 3 mass% or less, most preferably 0 with respect to the mass of the expanded beads.

The content of xylene-insoluble matter obtained by the hot xylene extraction method (i.e., the content of insoluble matter obtained by the hot xylene extraction method) in the expanded beads is determined by the following method. First, about 1 g of the expanded beads precisely weighed (the precise weight is defined as L (g)) are placed in a 150 mL-round-bottom flask, 100 mL of xylene is added, and a resultant is heated to reflux by a mantle heater for 6 hours to obtain a xylene solution containing insoluble matter. Then, the xylene solution containing insoluble matter is filtered through a 100-mesh metallic mesh to obtain the insoluble matter. The insoluble matter is dried in a vacuum dryer at 80°C for 8 hours or longer, and a weight M (g) of the dried insoluble matter is measured. The content (mass%) of the insoluble matter obtained by the hot xylene extraction method is determined by the following formula (II) from the weight L (g) of the expanded beads precisely weighed and the dry weight M (g) of the insoluble matter. It should be noted that the filtration of the xylene solution containing insoluble matter is preferably performed quickly using a metallic mesh.

Content (mass%) of insoluble matter obtained by hot xylene extraction method = (M/L) $\times$ 100 (II)

The linear low-density polyethylene has a density of 0.915 g/cm$^3$ or more and less than 0.930 g/cm$^3$, a heat of fusion $\Delta H1$ of 80 J/g or more and 100 J/g or less, a melting point of 120°C or higher and 130°C or lower, and a melt flow rate (i.e., MFR) of 0.8 g/10 min or more and 1.5 g/10 min or less as measured under conditions of a temperature of 190°C and a load of 2.16 kg. Further, the average cell diameter of the expanded beads is 50 $\mu$m or more and 180 $\mu$m or less. That is, the expanded bead according to the present disclosure uses, as a base resin, linear low-density polyethylene having a high melting point and a low MFR in spite of its low density and low heat of fusion. Further, the average cell diameter of the expanded beads is appropriately small. Such an expanded bead makes it possible to produce an expanded beads molded article having high flexibility and excellent surface smoothness by in-mold molding under excellent molding conditions. It should be noted that excellent moldability herein means that a molded article having excellent fusion bondability, secondary expandability, and shape recoverability after molding can be produced by molding under excellent molding conditions. The "excellent molding conditions" means that a molding heating temperature is low (specifically, a molding pressure is low), and the range of the molding heating temperature (specifically, the range of the molding pressure) is wide.

The linear low-density polyethylene has a density of 0.915 g/cm$^3$ or more and less than 0.930 g/cm$^3$. If the density of the linear low-density polyethylene is less than 0.915 g/cm$^3$, a resulting molded article is likely to shrink or deform just after taken out of a mold, which makes it difficult to produce a molded article by molding under excellent molding conditions. Specifically, the range of the molding heating temperature may be narrowed. From the viewpoint of further improving moldability, the density of the linear low-density polyethylene is preferably 0.918 g/cm$^3$ or more, more preferably 0.920 g/cm$^3$ or more. If the density of the linear low-density polyethylene is 0.930 g/cm$^3$ or more, a resulting molded article is poor in flexibility, which may result in a shortage of shock absorbability depending on the intended use of the molded article. Further, the molding heating temperature may become high. From such a viewpoint, the density of the linear low-density polyethylene is preferably 0.928 g/cm$^3$ or less, more preferably 0.925 g/cm$^3$ or less.

From the viewpoint of further improving the moldability of the expanded bead and the viewpoint of further improving the flexibility of a resulting molded article, the density of the linear low-density polyethylene is preferably 0.918 g/cm$^3$ or more and 0.928 g/cm$^3$ or less, more preferably 0.920 g/cm$^3$ or more and 0.925 /cm$^3$ or less.

The density of the linear low-density polyethylene is measured by, for example, Method B (Pycnometer method) described in JIS K7112:1999.

The linear low-density polyethylene has a heat of fusion ΔH1 of 80 J/g or more and 100 J/g or less. If the heat of fusion ΔH1 of the linear low-density polyethylene is less than 80 J/g, moldability significantly deteriorates so that molding becomes difficult. It should be noted that generally when the average cell diameter of polyethylene-based resin expanded beads increases, moldability tends to improve. However, as described above, if the heat of fusion ΔH1 of the linear low-density polyethylene is less than 80 J/g, molding is difficult even when the average cell diameter is relatively large. From the viewpoint of further improving moldability, the heat of fusion ΔH1 of the linear low-density polyethylene is preferably 82 J/g or more, more preferably 85 J/g or more. If the heat of fusion ΔH1 of the linear low-density polyethylene exceeds 100 J/g, expandability may deteriorate. Further, moldability deteriorates so that molding at a low temperature (specifically, at a low pressure) becomes difficult, and flexibility of a resulting molded article deteriorates. From the viewpoint of further improving expandability, moldability, and flexibility, the heat of fusion ΔH1 of the linear low-density polyethylene is preferably less than 100 J/g, preferably 95 J/g or less, more preferably 90 J/g or less.

From the viewpoint of further improving the expandability and moldability of the expanded bead and the viewpoint of further improving the flexibility of a resulting molded article, the heat of fusion ΔH1 of the linear low-density polyethylene is preferably 82 J/g or more and 95 J/g or less, more preferably 85 J/g or more and 90 J/g or less.

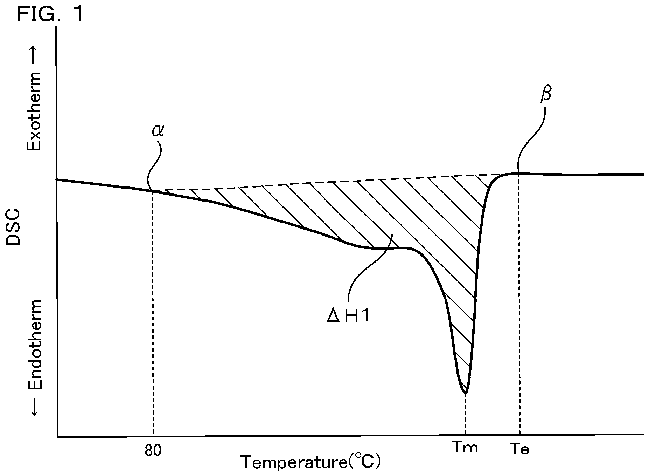

The heat of fusion ΔH1 of the linear low-density polyethylene is measured on the basis of, for example, JIS K7122:2012 using a heat-flux differential scanning calorimeter. First, in accordance with "Case where heat of fusion is measured after certain heat treatment is performed", a test specimen is conditioned at a heating rate of 10°C/min and a cooling rate of 10°C/min. Then, heat-flux DSC (i.e., differential scanning calorimetry) is performed by setting a heating rate to 10°C/min to obtain a DSC curve. The value of heat of fusion can be determined on the basis of the obtained DSC curve. When a plurality of melting peaks appear in the DSC curve, the total of areas of the melting peaks is defined as heat of fusion. An example of DSC curve of the linear low-density polyethylene is shown in Fig. 1. As shown in Fig. 1, the heat of fusion is represented by the area of a region (a shaded area in Fig. 1) surrounded by the DSC curve and a straight line drawn to connect a point α at 80°C on the DSC curve to a point β at a melting end temperature Te on the DSC curve.

The linear low-density polyethylene has a melting point of 120°C or higher and 130°C or lower. If the melting point of the linear low-density polyethylene is lower than 120°C, moldability of the expanded bead deteriorates so that molding becomes difficult. Specifically, a resulting molded article is likely to shrink or deform just after taken out of a mold and recoverability deteriorates. It should be noted that generally when the average cell diameter of polyethylene-based resin expanded beads increases, moldability tends to improve. However, as described above, the linear low-density polyethylene according to the present disclosure has a relatively low density and a relatively low heat of fusion, and therefore as described above, if the melting point of the linear low-density polyethylene is lower than 120°C, molding becomes difficult even when the average cell diameter is relatively large. From the viewpoint of further improving moldability, the melting point of the linear low-density polyethylene is preferably 121°C or higher, more preferably 122°C or higher. If the melting point of the linear low-density polyethylene exceeds 130°C, fusion bondability between the expanded beads deteriorates in molding at a low molding temperature so that moldability deteriorates. Further, flexibility of a resulting expanded beads molded article deteriorates. From the viewpoint of further improving the moldability of the expanded bead and the viewpoint of further improving the flexibility of a resulting molded article, the melting point of the linear low-density polyethylene is preferably 128°C or lower, more preferably 125°C or lower.

From the viewpoint of further improving the moldability of the expanded bead and the viewpoint of further improving the flexibility of a resulting molded article, the melting point of the linear low-density polyethylene is preferably 121°C or higher and 128°C or lower, more preferably 122°C or higher and 125°C or lower.

The melting point of the linear low-density polyethylene is measured by, for example, a testing method for transition temperature of plastic specified in JIS K7121:1987. First, in accordance with "(2) Case where a melting temperature is measured after certain heat treatment is performed", a test specimen is conditioned by heating from 30°C to 200°C at a heating rate of 10°C/min and then cooling to 30°C at a cooling rate of 10°C/min. Then, differential scanning calorimetry is performed by heating from 30°C to 200°C at a heating rate of 10°C/min to obtain a DSC curve. The peak temperature of an endothermic peak in the obtained DSC curve is defined as a melting point. It should be noted that when two or more endothermic peaks appear in the DSC curve, the peak temperature of the endothermic peak having the highest peak height is defined as a melting point.

The linear low-density polyethylene has an MFR of 0.8 g/10 min or more and 1.5 g/10 min or less. If the MFR of the linear low-density polyethylene is less than 0.8 g/10 min, secondary expandability of the expanded bead deteriorates, which may impair the surface smoothness of a resulting molded article. From the viewpoint of further improving secondary expandability and the viewpoint of further improving surface smoothness, the MFR of the linear low-density polyethylene is preferably 0.9 g/10 min or more, more preferably 1.0 g/10 min or more. If the MFR of the linear low-density polyethylene exceeds 1.5 g/10 min, the open cell content of the expanded beads is likely to increase, which may deteriorate moldability. From the viewpoint of further improving the moldability of the expanded bead, the MFR of the linear low-density polyethylene is preferably 1.4 g/10 min or less, more preferably 1.3 g/10 min or less.

From the viewpoint of further improving the surface smoothness of a resulting molded article and the viewpoint of further improving the moldability of the expanded bead, the MFR of the linear low-density polyethylene is preferably 0.9 g/10 min or more and 1.4 g/10 min or less, more preferably 1.0 g/10 min or more and 1.3 g /10 min or less.

The MFR of the linear low-density polyethylene is measured under conditions of a temperature of 190°C and a load of 2.16 kg in accordance with JIS K7210-1:2014.

The linear low-density polyethylene is preferably a polymer obtained by polymerization using a metallocene-based polymerization catalyst. In this case, it is easier to allow the density, heat of fusion, melting point, and MFR of resulting linear low-density polyethylene to fall within their respective ranges described above as compared to a case where polymerization is performed using a Ziegler-Natta polymerization catalyst or the like. This makes it easier to produce an expanded beads molded article having high flexibility and excellent surface smoothness by molding under excellent molding conditions. The density, the heat of fusion, the melting point, and the MFR can be controlled by changing the type of $\alpha$-olefin constituting the copolymer (specifically, the linear low-density polyethylene), the content of the $\alpha$-olefin, and the molecular weight and molecular weight distribution of the copolymer.

The heat of fusion $\Delta H1$ of the linear low-density polyethylene and the melting point Tm of the linear low-density polyethylene preferably satisfy a relationship represented by the following formula (I). The formula (I) indicates that the melting point of the linear low-density polyethylene is relatively high while the heat of fusion $\Delta H1$ of the linear low-density polyethylene is relatively small, that is, in the above-described range (i.e., 80 J/g or more and 100 J/g or less). In this case, it is possible to exert effects that an expanded beads molded article having high flexibility can be produced by molding at a lower molding heating temperature and that molding can be performed in a wide range of molding heating temperatures.

$$Tm > 0.2 \times \Delta H1 + 102 \cdots (I)$$

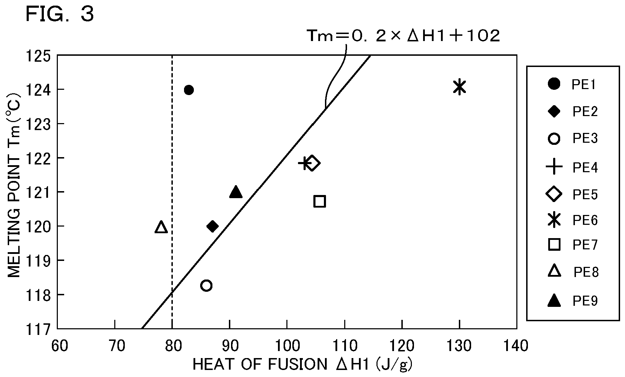

The formula (I) is derived in the following manner. Fig. 3 shows a graph in which a horizontal axis and a vertical axis respectively represent the heat of fusion $\Delta H1$ and the melting point Tm of each of linear low-density polyethylenes used in examples and comparative examples that will be described later. In Fig. 3, plotted points of the examples are colored in black. As can be seen from observation of the examples and the comparative examples, in a range where $\Delta H1$ is 80 J/g or more, expanded beads molded articles having high flexibility can be produced by molding at a lower temperature and molding can be performed in a wide range of molding heating temperatures in an area above a straight line representing Tm = 0.2 $\times$ $\Delta H1$ + 102 (i.e., in a region satisfying the formula (I)).

When the linear low-density polyethylene is a polymer obtained by polymerization using a metallocene-based polymerization catalyst, the formula (I) tends to easily be satisfied. The reason for this is not clear, but is considered to be that when the linear low-density polyethylene is obtained by polymerization using a metallocene catalyst, the crystallinity of the resin is appropriately reduced.

The density, heat of fusion, melting point, and MFR of the linear low-density polyethylene can be measured using, for example, linear low-density polyethylene to be used as a raw material of the expanded bead. Further, for example, when the raw material is uncertain, the density, heat of fusion, melting point, and MFR of a test specimen prepared by defoaming the expanded beads by hot pressing or the like can be measured.

The expanded bead may contain a different polymer(s) from polyethylene without impairing the object and effects of the present disclosure. Examples of the different polymer(s) include thermoplastic resins other than polyethylene, such as an ethylene-vinyl acetate copolymer, polypropylene, and polystyrene, and elastomers. The content of the different polymer(s) in the expanded beads is preferably 10 mass% or less, more preferably 5 mass% or less, even more preferably 3 mass% or less, particularly preferably 0. That is, it is particularly preferred that the expanded bead substantially contains only polyethylene as a polymer.

From the viewpoint of improving the fusion bondability of the expanded bead, a cover layer may be formed to cover the surface of the expanded bead. The cover layer is preferably formed of, for example, a polyethylene-based resin having a melting point lower than that of the polyethylene-based resin constituting the expanded bead.

The average cell diameter of the expanded beads is 50 $\mu$m or more and 180 $\mu$m or less. If the average cell diameter of the expanded beads is less than 50 $\mu$m, moldability significantly deteriorates so that an excellent molded article may not be obtained. From the viewpoint of further improving moldability, the average cell diameter of the expanded beads is preferably 75 $\mu$m or more, more preferably 100 $\mu$m or more. On the other hand, if the average cell diameter exceeds 180 $\mu$m, surface smoothness of a resulting molded article may be impaired. Further, a resulting molded article is poor in flexibility, which may result in a shortage of shock absorbability depending on the intended use of the molded article. From the viewpoint of further improving the surface smoothness and flexibility of a resulting molded article, the average cell diameter of the expanded beads is preferably 160 $\mu$m or less, more preferably 140 $\mu$m or less, even more preferably 120 $\mu$m or less.

From the viewpoint of further improving the moldability of the expanded bead and the viewpoint of further improving the surface smoothness and flexibility of a resulting molded article, the average cell diameter of the expanded beads is preferably 75 $\mu$m or more and 160 $\mu$m or less, more preferably 100 $\mu$m or more and 140 $\mu$m or less, even more preferably 100 $\mu$m or more and 120 $\mu$m or less.

The expanded bead is produced by, for example, a so-called dispersion medium release expansion method using an inorganic physical blowing agent such as carbon dioxide. It is conventionally known that when an inorganic physical blowing agent is used as a blowing agent in this method, a resulting expanded bead is likely to have a small cell diameter and moldability is likely to deteriorate. The expanded bead according to the present disclosure has excellent moldability in spite of the fact that, as described above, the average cell diameter is small. This makes it possible to produce a molded article having excellent flexibility and surface smoothness by molding under excellent molding conditions.

The average cell diameter of the expanded beads is measured, for example, in the following manner. The expanded bead is divided into almost equal halves, and an enlarged photograph of the entire cut surface thereof is taken using a microscope such as a scanning electron microscope. In the enlarged cross-sectional photograph, four line segments are drawn equiangularly (45°) from the outermost surface of the expanded bead to the outermost surface on the opposite side so as to pass through the center, and the number of cells intersecting these line segments is measured. The total length of the four line segments is divided by the total number of cells intersecting the line segments to calculate the cell diameter of the expanded bead. The same operation is performed on 20 expanded beads, and an arithmetic average of cell diameters of the expanded beads is calculated and defined as an average cell diameter.

The average cell diameter of the expanded beads can be adjusted to fall within the above-described range by, for example, using an inorganic physical blowing agent as a blowing agent in a dispersion medium release expansion method that will be described later. Further, the average cell diameter of the expanded beads can be adjusted to fall within the above-described range by changing expansion conditions such as the type of a cell controlling agent used, the amount of a cell controlling agent added, an expansion method, the amount of a blowing agent added, and an expansion temperature, the presence or absence of a second expanding step, and the conditions of a second expanding step. For example, when the amount of a cell controlling agent added is increased, the number of cells can be increased so that the average cell diameter is reduced. By providing a second expanding step, the average cell diameter can be increased.

From the viewpoint of further improving the moldability of the expanded bead and the physical properties and the like of a resulting molded article, the closed cell content of the expanded beads is preferably 80% or more, more preferably 85% or more, even more preferably 90% or more. It should be noted that the closed cell content of the expanded beads can be measured on the basis of Procedure C of ASTM-D2856-70.

In heat-flux differential scanning calorimetry of the expanded beads, it is preferable that a first DSC curve obtained by heating the expanded bead from 30°C to 200°C at a heating rate of 10°C/min has an intrinsic peak that is a melting peak intrinsic to the base resin and a high-temperature peak that is a melting peak appearing on a higher temperature side in comparison with the intrinsic peak, and a heat of fusion at the high-temperature peak is 15 J/g or more and 50 J/g or less. In this case, it is possible to obtain an effect that moldability of the expanded bead further improves. From the viewpoint of improving this effect, the heat of fusion of the high-temperature peak is more preferably 12 J/g or more and 40 J/g or less, even more preferably 15 J/g or more and 30 J/g or less.

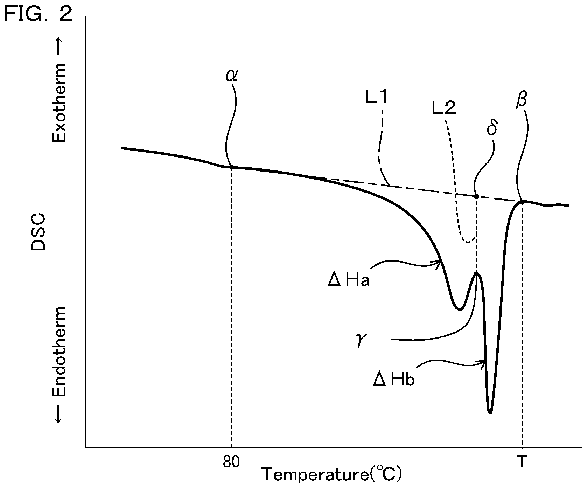

The heat of high temperature peak of the expanded beads is measured on the basis of, for example, JIS K7122:2012 using a heat-flux differential scanning calorimeter. Specifically, the heat of high temperature peak of the expanded beads can be calculated by the following method. First, heat-flux DSC is performed using 1 to 3 mg of expanded beads to obtain a DSC curve. At this time, a measurement start temperature is set to 30°C, a measurement end temperature is set to 200°C, and a heating rate is set to 10°C/min. When the expanded beads have a high-temperature peak, as shown in Fig. 2, an intrinsic peak ΔHa and a high-temperature peak ΔHb, which has a peak on the higher temperature side than the peak of the intrinsic peak ΔHa, appear in the DSC curve.

Then, a straight line L1 is drawn to connect a point α at 80°C to a point β at a melting end temperature T of the expanded beads on the DSC curve. It should be noted that the melting end temperature T is a high temperature-side end point of the high-temperature peak ΔHb, that is, an intersection between the high-temperature peak ΔHb in the DSC curve and a baseline on the higher temperature side than the high-temperature peak ΔHb.

After the straight line L1 is drawn, a straight line L2 parallel to the vertical axis of the graph is drawn so as to pass through a local maximum point γ present between the intrinsic peak ΔHa and the high-temperature peak ΔHb. The intrinsic peak ΔHa and the high-temperature peak ΔHb are divided by the straight line L2. The endothermic heat of the high-temperature peak ΔHb can be calculated on the basis of the area of a region surrounded by the curve of the high-temperature peak ΔHb in the DSC curve, the straight line L1, and the straight line L2.

It should be noted that when, after the first DSC curve is obtained by the above-described method, the expanded beads are once cooled and then a DSC curve is again obtained, only an intrinsic peak ΔHa appears in the second DSC curve, that is, a high-temperature peak ΔHb does not appear in the DSC curve.

The bulk density of the expanded beads is preferably 10 to 50 $kg/m^3$. In this case, physical properties and lightweight properties of a resulting molded article can be improved in a better-balanced way. From such a viewpoint, the bulk density is more preferably 12 to 40 $kg/m^3$, even more preferably 15 to 30 $kg/m^3$.

The bulk density of the expanded beads can be determined, for example, in the following manner. Expanded beads are randomly selected from a group of expanded beads, and a measuring cylinder having a capacity of 1 L is filled with a large number of the expanded beads up to the 1-liter mark in a natural accumulation state. The bulk density of the expanded beads is determined by dividing a mass W2 [g] of the expanded beads filled in the measuring cylinder by a volume V2 (1 [L]) of the measuring cylinder (W2/V2) and converting the unit to $[kg/m^3]$. Further, the bulk ratio [times] of the expanded beads can be determined by dividing the density $[kg/m^3]$ of the base resin constituting the expanded beads by the bulk density $[kg/m^3]$.

The expanded bead is produced by a so-called dispersion medium release expansion method (i.e., by a direct expansion method) using an inorganic physical blowing agent. Specifically, the expanded bead is produced by performing a dispersing step, a blowing agent impregnating step, and an expanding step which will be described below.

In the dispersing step, polyethylene-based resin particles are dispersed in a dispersion medium in a sealed container. Hereinafter, the polyethylene-based resin particles are appropriately referred to as "resin particles". The resin particles contain, as a base resin, non-crosslinked linear low-density polyethylene. The non-crosslinked linear low-density polyethylene is as described above.

The resin particles are produced by, for example, such a resin particle production step as described below. Specifically, non-crosslinked linear low-density polyethylene and an additive, such as a cell controlling agent, optionally added are supplied to an extruder and melt-kneaded. A melt-kneaded material is extruded into a strand through a slit of a die attached to the tip of the extruder, and the extruded strand is cooled by, for example, immersion in water. Then, the extruded strand is cut by a pelletizer so that resin particles have a predetermined weight. In this way, resin particles can be produced (strand-cut method). Alternatively, resin particles may be produced by, after melt-kneading, extruding the melt-kneaded material under water and cutting the extruded material by a pelletizer just after extrusion so that resin particles have a predetermined weight (underwater cutting method).

The average weight per particle of the resin particles is preferably 0.2 to 10 mg, more preferably 0.5 to 5 mg. The shape of the individual resin particles is columnar, spherical, prismatic, or oval. The expanded bead has a shape corresponding (specifically, similar) to the shape of the individual resin particles before expansion.

A cell controlling agent may previously be added to the resin particles to adjust the bulk density and cell diameter of the expanded beads to their respective appropriate values. Examples of the cell controlling agent include: inorganic materials such as talc, calcium carbonate, borax, zinc borate, aluminum hydroxide, and silica; and polymers such as polytetrafluoroethylene, polyethylene wax, polycarbonate, and cross-linked polystyrene. Usually, the amount of the cell controlling agent to be added is preferably 0.001 to 5 parts by mass, more preferably 0.005 to 3 parts by mass, even more preferably 0.01 to 2 parts by mass per 100 parts by mass of the linear low-density polyethylene. If necessary, an additive may further be added to the resin particles, and examples thereof include a crystal nucleating agent, a coloring agent, a flame retarder, a flame retardant aid, a plasticizer, an antistatic agent, an antioxidant, a UV protectant, a light stabilizer, an electroconductive filler, and an antimicrobial agent.

In the dispersing step, as described above, the resin particles are dispersed in a dispersion medium in a sealed container. The sealed container may be a pressure-resistant vessel such as an autoclave. The dispersion medium is, for example, a liquid, and is specifically an aqueous medium such as water. A dispersing agent may be added to the dispersion medium. Examples of the dispersing agent include microparticulate aluminum oxide, titanium oxide, basic magnesium carbonate, basic zinc carbonate, calcium carbonate, kaolin, mica, and clay. Such a dispersing agent is usually used in an amount of about 0.001 to 1 part by mass per 100 parts by mass of the resin particles.

When the dispersing agent is used, an anionic surfactant is preferably used as a dispersing aid in combination with the dispersing agent, and examples of the anionic surfactant include sodium dodecylbenzenesulfonate, sodium alkylbenzenesulfonate, sodium lauryl sulfate, and sodium oleate. The amount of the dispersing aid to be added is preferably 0.001 to 1 part by mass per 100 parts by mass of the resin particles.

In the blowing agent impregnating step, the resin particles are impregnated with an inorganic physical blowing agent in the sealed container. Specifically, an inorganic physical blowing agent is charged under pressure into the sealed container, in which the resin particles are dispersed in the dispersion medium, to impregnate the resin particles with the blowing agent under heat and pressure.

The inorganic physical blowing agent may be carbon dioxide, nitrogen, argon, helium, air, or the like. These may be used singly or in combination of two or more of them. From the viewpoint that environmental load can be reduced by preventing ozone layer destruction and the viewpoint of being less expensive, the inorganic physical blowing agent is preferably carbon dioxide, nitrogen, or air, more preferably carbon dioxide. It should be noted that the inorganic physical blowing agent may be used in combination with an organic physical blowing agent, but from the viewpoint of reducing environmental load, the amount of the organic physical blowing agent to be added is preferably 20 mass% or less, more preferably 10 mass% or less, even more preferably 0 (i.e., it is even more preferred that only the inorganic physical blowing agent is used) when the total amount of the inorganic physical blowing agent and the organic physical blowing agent is taken as 100 mass%.

The amount of the blowing agent to be used can appropriately be adjusted depending on the bulk density of the expanded beads. Further, the amount of the blowing agent to be used is determined in consideration of the type of linear low-density polyethylene used and the type of blowing agent used. The amount of the blowing agent to be used is usually 0.5 to 30 parts by mass, preferably 1 to 15 parts by mass per 100 parts by mass of the resin particles.

At any of time points of before, during, and after the blowing agent impregnating step, a high-temperature peak forming step is preferably performed in which the dispersion medium, in which the resin particles are dispersed, is maintained at a predetermined temperature. In this case, it is possible to easily allow the above-described high-temperature peak to appear. The high-temperature peak forming step is preferably performed after the blowing agent impregnating step. Specifically, the high-temperature peak forming step is performed in the following manner.

The resin particles dispersed in the dispersion medium in the sealed container are heated at a temperature lower than a melting end temperature $Te°C$ of the linear low-density polyethylene to melt part or most part of the linear low-density polyethylene. Then, the dispersion medium is maintained at a temperature $Ta°C$ that is equal to or higher than a temperature lower by 30°C than the melting point $Tm°C$ of the linear low-density polyethylene (i.e., $Tm - 30°C$ or higher) and lower than the melting end temperature $Te°C$ for sufficient time (e.g., 1 to 60 minutes) to recrystallize the crystalline portion of the melted linear low-density polyethylene. In this way, it is possible to allow a high-temperature peak to appear.

Alternatively, it is possible to allow a high-temperature peak to appear also by slowly heating the resin particles dispersed in the dispersion medium in the sealed container to a temperature equal to or higher than $Tm - 30°C$ and lower than the melting end temperature $Te°C$ for sufficient time.

It should be noted that such a holding temperature range of $Tm - 30°C$ or higher and lower than $Te°C$ is appropriate when an inorganic physical blowing agent is used as a blowing agent.

In the expanding step, the resin particles impregnated with the blowing agent are released from the sealed container into an atmosphere having a pressure lower than the internal pressure of the sealed container. This makes it possible to expand the resin particles and obtain expanded beads.

Specifically, in the expanding step, the resin particles containing the blowing agent are released together with the dispersion medium from the sealed container into a low-pressure atmosphere at an expansion temperature $Tb°C$ to obtain expanded beads. The expansion temperature $Tb$ is preferably equal to or higher than a temperature lower by 15°C than the melting point $Tm$ of the low-density polyethylene (i.e., $Tm - 15°C$) and equal to or lower than the melting end temperature $Te$.

The magnitude of the above-described heat of high temperature peak can be adjusted by changing conditions such as the holding temperature $Ta$ in the high-temperature peak forming step, a holding time at the holding temperature $Ta$, and the expansion temperature $Tb$ in the expanding step. For example, the heat of high temperature peak of the expanded beads tends to increase as a holding time at the holding temperature $Ta$ increases. Further, the heat of high temperature peak of the expanded beads tends to increase as the expansion temperature $Tb$ decreases.

It should be noted that the expanded beads obtained in such a manner as described above may be subjected to pressure treatment with air or the like to increase the internal pressure of cells and then expanded by heating with steam or the like (i.e., a second expanding step) to obtain expanded beads (i.e., second-step expanded beads) having a lower apparent density.

The expanded beads are subjected to in-mold molding to obtain an expanded beads molded article. Specifically, the expanded beads are filled in a mold and then heated by introducing a heating medium such as steam into the mold and are, as a result, secondarily expanded and fusion-bonded together so that a molded article having a shape corresponding to the shape of a molding space is obtained. Examples of a method for producing a molded article include known in-mold molding methods. Specific examples thereof include in-mold molding methods such as a cracking molding method (see, for example, JP S46-38359 B), a pressure molding method (see, for example, JP S51-22951 B), a compression filling molding method (see, for example, JP H04-46217 B), an atmospheric filling molding method (see, for example, JP H06-49795 B), and a combination of two or more of these methods (see, for example, JP H06-22919 B).

In in-mold molding of expanded beads, in order to supplement the expandability (specifically, secondary expandability) of the expanded beads, the expanded beads are often previously subjected to pressure treatment using a pressurized gas such as air before filled into a mold to increase the pressure in the cells of the expanded beads to a predetermined internal pressure, and are then filled into the mold and molded. On the other hand, since the expanded bead according to the present disclosure has excellent expandability and moldability, an excellent molded article can be produced without performing such pressure treatment. Specifically, the internal pressure of the expanded beads filled into the mold is preferably 0.01 MPa (G; gauge pressure) or less, more preferably 0 MPa (G).

The molded article is constituted from a large number of the expanded beads fusion-bonded together and exhibits excellent flexibility. Further, the molded article has a smooth surface and therefore has a beautiful external appearance.

From the viewpoint of achieving both lightweight properties and stiffness, the density of the molded article is preferably 10 to 50 $kg/m^3$, more preferably 15 to 40 $kg/m^3$, even more preferably 18 to 30 $kg/m^3$.

The density of the molded article is calculated by dividing the weight (g) of the molded article by the volume (L) of the molded article determined from the external dimensions of the molded article and by performing unit conversion. It should be noted that when it is not easy to determine the volume from the external dimensions of the molded article, the volume of the molded article can be determined by a water immersion method.

The product of tensile strength S [unit: MPa] and tensile elongation E [unit: %] of the molded article, $S \times E$ [unit: MPa•%], is preferably 10 MPa•% or more. In this case, the molded article can reliably exhibit excellent flexibility. Further, durability of the molded article improves, which makes it possible to suitably use the molded article as, for example, a shock-absorbing material that is repeatedly used. From the viewpoint of further improving flexibility and durability, the product of tensile strength S and tensile elongation E (i.e., $S \times E$) is more preferably 12 MPa•% or more. It should be noted that the upper limit of the product is approximately 50 MPa•%.

The tensile strength S and tensile elongation E of the molded article are measured in accordance with JIS K6767:1999. To be more specific, firstly, the molded article is cut using a vertical slicer to prepare a cut-out piece of 120 mm $\times$ 25 mm $\times$ 10 mm having each face constituted by a cut surface. A No. 1 dumbbell test specimen is prepared from the cut-out piece with the use of a jig saw. Then, the test specimen is subjected to a tensile test at a tensile speed of 500 mm/min to determine tensile strength and tensile elongation. The thus measured maximum tensile stress under tension and elongation at break are respectively defined as tensile strength S and tensile elongation E.

The tensile strength S of the molded article is preferably 0.25 MPa or more, more preferably 0.30 MPa or more. In this case, the molded article can more reliably exhibit excellent flexibility. From the same viewpoint, the tensile elongation E is more preferably 35% or more, even more preferably 40% or more.

The compressive stress at 50% strain of the molded article is preferably 50 to 300 kPa. In this case, the molded article can exhibit excellent strength while having flexibility. From such a viewpoint, the compressive stress at 50% strain of the molded article is more preferably 80 to 250 kPa, even more preferably 100 to 200 kPa.

The compressive stress at 50% strain of the molded article can be determined, for example, in the following manner. First, a test specimen having a length of 50 mm, a width of 50 mm, and a thickness of 25 mm is cut out from the center portion of the molded article so as not to include a skin layer present at the surface of the molded article. Then, the test specimen is subjected to a compression test at a compression rate of 10 mm/min on the basis of JIS K6767:1999 to determine the compressive stress at 50% strain of the molded article.

The expanded bead according to the present disclosure uses, as a base resin, the above-described specific linear low-density polyethylene and has a cell diameter within the above-described specific range. Therefore, a molded article obtained using such expanded beads exhibits excellent flexibility and surface smoothness. Thus, the molded article exhibits excellent shock absorbability and surface protectiveness and is therefore suitable as a shock-absorbing packing material. Particularly, the molded article is suitable as a packing material for electric/electronic devices.

Examples

Hereinbelow, examples and comparative examples of the expanded bead and the molded article will be described. It should be noted that the present invention is not limited by the following examples.

In the examples and the comparative examples, various linear low-density polyethylenes (PE1 to PE9) shown in Table 1 were used as base resins of expanded beads. PE7 is a mixed resin obtained by mixing PE3 and PE6 in a ratio of 70 mass% : 30 mass%, and PE9 is a mixed resin obtained by mixing PE2 and PE6 in a ratio of 90 mass% : 10 mass%.

Abbreviations shown in Table 1 are as follows. "PE-LLD" stands for linear low-density polyethylene.

• Melting point

The melting point of each of the linear low-density polyethylenes (PE1 to PE9) was measured by a testing method for transition temperature of plastic specified in JIS K7121:1987. First, pellets of the linear low-density polyethylene were prepared as a test specimen. In accordance with "(2) Case where a melting temperature is measured after certain heat treatment is performed", 2 mg of the test specimen was conditioned by heating from 30°C to 200°C at a heating rate of 10°C/min and then cooling to 30°C at a cooling rate of 10°C/min. Then, differential scanning calorimetry was performed by heating from 30°C to 200°C at a heating rate of 10°C/min to obtain a DSC curve. The peak temperature of an endothermic peak in the obtained DSC curve was defined as a melting point. It should be noted that a heat-flux differential scanning calorimeter "DSC7020" manufactured by Hitachi High-Tech Science Corporation was used as a measurement device. The flow rate of nitrogen gas during DSC measurement was set to 30 milliliters/min.

• Heat of fusion

The heat of fusion of each of the linear low-density polyethylenes (PE1 to PE9) was measured using a heat-flux differential scanning calorimeter on the basis of JIS K7122:2012. First, in accordance with "Case where heat of fusion is measured after certain heat treatment is performed", a test specimen was conditioned at a heating rate of 10°C/min and a cooling rate of 10°C/min. Then, heat-flux DSC (i.e., differential scanning calorimetry) was performed by setting a heating rate to 10 °C/min to obtain a DSC curve. The value of heat of fusion was determined on the basis of the obtained DSC curve. It should be noted that the DSC curve of PE1 is shown in Fig. 1. As shown in Fig. 1, the heat of fusion is represented by the area of a region (a shaded area in Fig. 1) surrounded by the DSC curve and a straight line drawn to connect a point α at 80°C on the DSC curve to a point β at a melting end temperature Te on the DSC curve. It should be noted that a heat-flux differential scanning calorimeter "DSC7020" manufactured by Hitachi High-Tech Corporation was used as a measurement device.

• MFR

The MFR of each of the linear low-density polyethylenes (PE1 to PE9) was measured under conditions of a temperature of 190°C and a load of 2.16 kg in accordance with JIS K7210-1:2014.

[Examples 1 to 4, Comparative Examples 1 to 7]

(Production of resin particles)

100 parts by mass of each of the linear low-density polyethylenes shown in Table 2 and Table 3 and 0.02 parts by mass of zinc borate as a cell controlling agent were supplied to an extruder and melt-kneaded in the extruder to obtain a melted resin. As the zinc borate, "Zinc borate 2335" manufactured by Tomita Pharmaceutical Co., Ltd. was used. Then, the melted resin in the extruder was extruded into a strand through a slit of a die. The extruded strand was cooled in water and cut by a pelletizer to obtain resin particles each having a mass of 1.6 mg. It should be noted that the ratio of length L to diameter D (L/D) of the resin particles was set to 1.8.

(Production of first-step expanded beads)

In an autoclave having an inner capacity of 5 L, 3 liters of water as a dispersion medium and 1 kg of the resin particles were placed. Then, 0.3 parts by mass of mica as a dispersing agent and 0.03 parts by mass (as an active ingredient) of an aqueous sodium dodecylbenzenesulfonate solution as a surfactant were further added to the autoclave. As the mica, A-11 manufactured by YAMAGUCHI MICA CO., LTD. was used, and as the aqueous sodium dodecylbenzenesulfonate solution, NEOGEN (registered trademark) S-20F manufactured by DKS Co., Ltd. was used.

The contents in the autoclave were heated to an expansion temperature shown in Table 2 or Table 3 with stirring while carbon dioxide as a physical blowing agent was charged under pressure into the autoclave until an equilibrium pressure shown in Table 2 or Table 3 was achieved to impregnate the resin particles with the blowing agent. Then, the inside of the autoclave was maintained at the expansion temperature for 10 minutes, and the autoclave was then opened to release the contents to atmospheric pressure, so that the resin particles were expanded to obtain first-step expanded beads (first expanding step). The expansion temperature is shown in Table 2 or Table 3. It should be noted that in Table 2 and Table 3, "(G)" stands for gauge pressure.

The bulk density of the first-step expanded beads was measured in the following manner. The measurement was performed on first-step expanded beads that had been conditioned by being left to stand for 2 days in an atmosphere having a temperature of 23°C, a relative humidity of 50%, and an atmospheric pressure of 1 atm. First-step expanded beads were randomly selected from a group of first-step expanded beads after conditioning, and a measuring cylinder having a capacity of 1 L was filled with a large number of the first-step expanded beads up to the 1-liter mark in a natural accumulation state. The bulk density of the first-step expanded beads was determined by measuring a mass W2 [g] of the first-step expanded beads filled in the measuring cylinder, dividing the mass W2 by a volume V2 of the measuring cylinder (i.e., 1 liter) (W2/V2), and converting the unit to [kg/m$^3$]. The results are shown in Table 2 and Table 3.

(Production of second-step expanded beads)

Then, a second expanding step was performed to produce second-step expanded beads from the first-step expanded beads. First, the first-step expanded beads were impregnated with compressed air in a pressure vessel to increase the internal pressure of the expanded beads to a value shown in Table 2 or Table 3. The first-step expanded beads to which internal pressure had been applied were filled into a pressurized expanding machine and then further expanded by heating with steam having a pressure (gauge pressure) shown in Table 2 or Table 3 (second expanding step). In this way, second-step expanded beads were obtained. It should be noted that the content of insoluble matter obtained by the hot xylene extraction method in the second-step expanded beads was 0. The bulk density, bulk ratio, average cell diameter, and heat of high temperature peak of the second-step expanded beads were measured in the following manner. The measurement results are shown in Table 2 and Table 3.

• Bulk density

The bulk ratio of the second-step expanded beads was measured in the same manner as described with reference to the first-step expanded beads.

• Bulk ratio

The bulk ratio [times] of the second-step expanded beads was determined by dividing the density [kg/m$^3$] of the base resin constituting the expanded beads by the bulk density [kg/m$^3$] of the second-step expanded beads.

• Average cell diameter

The expanded bead was divided into almost equal halves, and an enlarged photograph of the entire cut surface was taken using a microscope such as a scanning electron microscope. In the enlarged cross-sectional photograph, four line segments were drawn equiangularly (45°) from the outermost surface of the expanded bead to the outermost surface on the opposite side so as to pass through the center, and the number of cells intersecting these line segments was measured. The total length of the four line segments was divided by the total number of cells intersecting the line segments to calculate the cell diameter of the expanded bead. The same operation was performed on 20 expanded beads, and an arithmetic average of cell diameters of the expanded beads was calculated and defined as an average cell diameter.

• Closed cell content

The closed cell content of the expanded beads was measured using an air comparison pycnometer on the basis of Procedure C of ASTM-D2856-70. Specifically, the closed cell content of the expanded beads was determined in the following manner. Expanded beads having a bulk volume of about 20 cm$^3$ after conditioning were prepared as a measurement sample, and an apparent volume Va was accurately measured by an ethanol immersion method as described below. The measurement sample whose apparent volume Va was measured was sufficiently dried, and then a true volume value Vx of the measurement sample was measured with Beckman Model 1000 Air Comparison Pycnometer manufactured by Tokyo-Science Co., Ltd. in accordance with Procedure C described in ASTM-D2856-70. Then, on the basis of these volume values Va and Vx, the closed cell content was calculated by the following formula (III), and the average of 5 samples (N = 5) was determined as a closed cell content of the expanded beads.

$$\text{Closed cell content (\%)} = (Vx - W/\rho) \times 100/(Va - W/\rho) \cdots \text{(III)}$$

In the above formula,

Vx represents the true volume of the expanded beads measured by the above-described method, that is, the sum (unit: $cm^3$) of the volume of the resin constituting the expanded beads and the total volume of closed cell portions in the expanded beads,

Va represents the apparent volume (unit: $cm^3$) of the expanded beads measured from an increase in liquid level when the expanded beads are immersed in ethanol contained in a measuring cylinder,

W represents the weight (unit: g) of the expanded beads as a measurement sample, and

$\rho$ represents the density (unit: $g/cm^3$) of the resin constituting the expanded beads.

• Heat of high temperature peak

The heat of high temperature peak of the expanded beads (specifically, the second-step expanded beads) was measured by the above-described method. Specifically, heat-flux DSC was performed using about 2 mg of expanded beads, and the peak area of a high-temperature peak in an obtained DSC curve was defined as heat of high temperature peak of the expanded beads. In the heat-flux DSC, a measurement start temperature was set to 30°C, a measurement end temperature was set to 200°C, and a heating rate was set to 10°C/min. As a measurement device, a heat-flux differential scanning calorimeter (manufactured by Hitachi High-Tech Science Corporation, model number: DSC7020) was used.

• Evaluation of moldable range

The expanded beads of each of Examples and Comparative Examples were subjected to in-mold molding by a method described in "• In-mold molding by changing a molding pressure in increments of 0.01 MPa" described later to experimentally prepare molded articles by changing a molding pressure in increments of 0.01 MPa in the range of 0.07 to 0.13 MPa (G). A moldable range was evaluated according to the following criteria. The results are shown in Table 2 and Table 3.

3: Three or more molding pressures at which an acceptable product can be molded are present in the range of 0.07 to 0.13 MPa (G).

2: Two molding pressures at which an acceptable product can be molded are present in the range of 0.07 to 0.13 MPa (G).

1: One molding pressure at which an acceptable product can be molded is present in the range of 0.07 to 0.13 MPa (G)

0: No molding pressure at which an acceptable product can be molded is present in the range of 0.07 to 0.13 MPa (G).

• In-mold molding by changing molding pressure in increments of 0.01 MPa

In accordance with a method described later in "(Production of expanded beads molded article)", molded articles were produced by molding by changing a molding pressure (specifically, a molding steam pressure) in increments of 0.01 MPa between 0.07 to 0.13 MPa (G). The molded articles were demolded and then aged by being left to stand in an oven adjusted to 80°C for 12 hours. The molded articles after aging were conditioned by being left to stand for 24 hours in an atmosphere having a relative humidity of 50%, a temperature of 23°C, and an atmospheric pressure of 1 atm. Then, the secondary expandability, fusion bondability, and recoverability of the molded articles were evaluated on a scale of one to five according to the following criteria. Each of the evaluation items is regarded as acceptable when rated as 5. The steam pressure at which a molded article regarded as acceptable in terms of all the evaluation items was obtained was defined as the above-described molding pressure at which an acceptable product can be molded. When the lower limit of the moldable steam pressure is lower, the moldable molding heating temperature is lower, that is, moldability is more excellent. Further, when the range from the lower limit to the upper limit of the moldable steam pressure is wider, the range of the moldable molding heating temperature is wider, that is, moldability is more excellent.

• Secondary expandability

A rectangle of 100 mm × 100 mm was drawn in the center portion of the expanded beads molded article, and then a diagonal line was drawn from any one of corners of the rectangle. The number of voids (i.e., gaps between expanded beads) that were formed to overlap the diagonal line and were larger than a 1-mm square was counted. On the basis of the number of voids, secondary expandability was evaluated on a scale of one to five according to the following criteria.

5: The number of voids is less than 5.

4: The number of voids is 5 or more and less than 10.

3: The number of voids is 10 or more and less than 15.
2: The number of voids is 15 or more and less than 20.
1: The number of voids is 20 or more.

• Fusion bondability

The molded article was broken by bending it almost in half in the longitudinal direction. The exposed fracture surface was visually observed to count the number of expanded beads separated at their interfaces and the number of expanded beads fractured per se. Then, the ratio of the number of expanded beads fractured per se to the total number of expanded beads present in the exposed surface, that is, the total of the number of expanded beads separated at their interfaces and the number of expanded beads fractured per se was calculated. A value obtained by expressing this ratio in percentage (%) was defined as a fusion-bonding rate. On the basis of the fusion-bonding rate, fusion bondability was evaluated on a scale of one to five according to the following criteria.

5: The fusion-bonding rate is 80% or more.
4: The fusion-bonding rate is 60% or more and less than 80%.
3: The fusion-bonding rate is 40% or more and less than 60%.
2: The fusion-bonding rate is 20% or more and less than 40%.
1: The fusion-bonding rate is less than 20%.

• Recoverability

The presence or absence of a sink mark, that is, a central area depressed lower than a surrounding area in the expanded beads molded article was evaluated. Specifically, the thicknesses of the obtained molded article were measured at its center and four corners, and the ratio of the thickness at the center to the thickness at the corner having the largest thickness among the four corners was calculated. On the basis of the thickness ratio, recoverability was evaluated on a scale of one to five according to the following criteria.

5: The thickness ratio is 99% or more.
4: The thickness ratio is 98% or more and less than 99%.
3: The thickness ratio is 96% or more and less than 98%.
2: The thickness ratio is 90% or more and less than 96%.
1: The thickness ratio is less than 90%.

(Production of expanded beads molded article)

First, the second-step expanded beads obtained in the second expanding step were dried at 23°C for 24 hours. Then, the second-step expanded beads were filled in a flat plate mold (specifically, a mold having a flat plate-shaped cavity) whose cracking size was adjusted to 20% (specifically, 8 mm) without applying internal pressure to the second-step expanded beads (i.e., the internal pressure was 0). The mold has a length of 200 mm, a width of 65 mm, and a thickness of 40 mm. Then, the mold was clamped, and steam was supplied for 5 seconds in a state where drain valves at both surfaces of the mold were opened to preheat the mold. Then, steam of 0.01 MPa (G) was supplied from one of the surfaces of the mold to perform one-direction heating. Then, steam of 0.01 MPa (G) was supplied from the other surface of the mold to perform one-direction heating, and then heating was performed for 8 seconds with steam having a molding pressure shown in Table 2 or Table 3. The heating for 8 seconds is main heating. After the completion of the main heating, the pressure was released, water cooling was performed until the value of a surface pressure meter attached to the inner surface of the mold was reduced to 0.02 MPa (G), and then a molded article was demolded. The molded article was aged by being left to stand for 12 hours in an oven at 80°C. The molded article was conditioned by being left to stand for 24 hours under conditions of a relative humidity of 50%, a temperature of 23°C, and an atmospheric pressure of 1 atm. In this way, a molded article was produced. Then, the density, tensile strength, tensile elongation, and compressive stress at 50% strain of the molded article were measured in the following manner, and the surface smoothness of the molded article was evaluated. The measurement results and evaluation results are shown in Table 2 and Table 3.

• Density of molded article

The density ($kg/m^3$) of the molded article was calculated by dividing the weight (g) of the molded article by the volume (L) of the molded article determined from the external dimensions of the molded article and by performing unit conversion.

• Tensile strength and tensile elongation

The tensile strength S and tensile elongation E of the molded article were determined in accordance with JIS K6767:1999. First, a cut-out piece of 120 mm × 25 mm × 10 mm was cut out from the molded article to have cut-out surfaces as its all surfaces with the use of a vertical slicer. A No. 1 dumbbell test specimen was prepared from the cut-out piece with the use of a jig saw. Then, the test specimen was subjected to a tensile test at a tensile speed of 500 mm/min. The thus measured maximum tensile stress under tension and elongation at break were respectively defined as tensile strength S and tensile elongation E.

• Compressive stress at 50% strain

A test specimen having a length of 50 mm, a width of 50 mm, and a thickness of 25 mm was cut out from the center portion of the molded article so as not to include a skin layer present at the surface of the molded article. Then, the test specimen was subjected to a compression test at a compression rate of 10 mm/min on the basis of JIS K6767:1999 to determine the compressive stress at 50% strain of the molded article. It should be noted that the density of the test specimen used to measure the compressive stress at 50% strain was determined by the same method as used to measure the density of the molded article. The density of the test specimen is shown as "Density of cut-out molded article" in Table 2 or Table 3.

(Surface smoothness)

The surface of the molded article was observed, and the surface property of the molded article was evaluated according to the following criteria.

A: The molded article has an excellent surface state such that there is almost no gap between beads in the surface of the molded article and irregularities resulting from mold transfer, molding marks, and the like are not conspicuous.
B: Gaps between beads or irregularities resulting from mold transfer, molding marks, and the like are slightly observed in the surface of the molded article.
C: Gaps between beads or irregularities resulting from mold transfer, molding marks, and the like are observed in the surface of the molded article.

[Table 1]

(Table 1)

| Name | PE1 | PE2 | PE3 | PE4 | PE5 | PE6 | PE7 | PE8 | PE9 |
|---|---|---|---|---|---|---|---|---|---|
| Type of resin | PE-LLD | PE-LLD | PE-LLD | PE-LLD | PE-LLD | PE-LLD | PE-LLD | PE-LLD | PE-LLD |
| Catalyst | Metallocene | Metallocene | Metallocene | Ziegler-Natta | Ziegler-Natta | Ziegler-Natta | - | Ziegler-Natta | - |
| Type of comonomer | 1-Hexene | 1-Hexene | 1-Hexene | 1-Octene | 4-Methyl-1-pentene | 1-Butene | - | 1-Butene | - |
| Number of carbon atoms of comonomer | 6 | 6 | 6 | 8 | 6 | 4 | - | 4 | - |
| Density of resin (g/cm$^3$) | 0.920 | 0.922 | 0.920 | 0.926 | 0.927 | 0.936 | 0.925 | 0.922 | 0.923 |
| Melting point (°C) | 124 | 120 | 118 | 122 | 122 | 124 | 121 | 120 | 121 |

(continued)

| Name | PE1 | PE2 | PE3 | PE4 | PE5 | PE6 | PE7 | PE8 | PE9 |
|---|---|---|---|---|---|---|---|---|---|
| Heat of fusion (J/g) | 83 | 87 | 86 | 103 | 104 | 130 | 106 | 78 | 91 |
| MFR (g/10 min) | 1.1 | 1.4 | 1.0 | 1.0 | 2.3 | 5.0 | 2.5 | 0.8 | 1.5 |
| $0.2 \times \Delta H1 + 102$ | 119 | 119 | 119 | 123 | 123 | 128 | 123 | 118 | 120 |
| Formula (I) | Satisfied | Satisfied | Not satisfied | Not satisfied | Not satisfied | Not satisfied | Not satisfied | Satisfied | Satisfied |

[Table 2]

(Table 2)

| Example No. | | | Example 1 | Example 2 | Example 3 | Example 4 |
|---|---|---|---|---|---|---|
| Resin particles | Base resin | - | PE1 | PE2 | PE1 | PE9 |
| First-step expanded beads | Expansion temperature | °C | 121.5 | 119.0 | 121.5 | 119.5 |
| | Equilibrium pressure | MPa (G) | 4.3 | 4.0 | 4.3 | 4 |
| | Bulk density | kg/m³ | 56 | 62 | 56 | 54 |
| Second-step expanded beads | Internal pressure | MPa (G) | 0.55 | 0.60 | 0.35 | 0.60 |
| | Steam pressure | MPa (G) | 0.05 | 0.05 | 0.05 | 0.05 |
| | Heating time | sec | 15 | 15 | 10 | 15 |
| | Bulk density | kg/m³ | 20.5 | 17.8 | 37.0 | 18.1 |
| | Bulk ratio | times | 45.1 | 52.0 | 25.0 | 51.0 |
| | Average cell diameter | μm | 91 | 160 | 75 | 123 |
| | Closed cell content | % | 94 | 95 | 94 | 95 |
| | Heat of high temperature peak | J/g | 20.5 | 16.0 | 20.5 | 18.0 |
| Evaluation of moldability (Molding without pressurization) | Moldable range | MPa (G) | 0.10 to 0.11 | 0.07 to 0.09 | 0.10 to 0.12 | 0.07 to 0.09 |
| | Evaluation | - | 2 | 3 | 3 | 3 |

(continued)

| Example No. | | | Example 1 | Example 2 | Example 3 | Example 4 |
|---|---|---|---|---|---|---|
| Molded article | Molding pressure | MPa (G) | 0.10 | 0.07 | 0.10 | 0.07 |
| | Density of molded article | kg/m$^3$ | 27.5 | 24.3 | 47.9 | 25.0 |
| | Tensile strength S | MPa | 0.35 | 0.27 | 0.56 | 0.31 |
| | Tensile elongation E | % | 45 | 40 | 60 | 41 |
| | S × E | MPa•% | 15.9 | 10.8 | 33.3 | 12.7 |
| | Compressive stress at 50% strain | kPa | 124 | 90 | 205 | 108 |
| | Density of cut-out molded article | kg/m$^3$ | 25.0 | 20.0 | 45.5 | 21.0 |
| | Evaluation of surface smoothness | - | A | A | A | A |

[Table 3]

(Table 3)

| Comparative Example No. | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Resin particles | Base resin | - | PE3 | PE7 | PE4 | PE5 | PE5 | PE1 | PE8 |
| First-step expanded beads | Expansion temperature | °C | 120.5 | 120.0 | 122.5 | 123.5 | 123.5 | 123.0 | 117.0 |
| | Equilibrium pressure | MPa (G) | 4.1 | 4.1 | 4.1 | 3.8 | 3.8 | 3.7 | 3.9 |
| | Bulk density | kg/m$^3$ | 47 | 44 | 66 | 62 | 42 | 77 | 98 |
| Second-step expanded beads | Internal pressure | MPa (G) | 0.45 | 0.45 | 0.59 | 0.55 | 0.45 | 0.68 | 0.63 |
| | Steam pressure | MPa (G) | 0.02 | 0.02 | 0.06 | 0.06 | 0.06 | 0.06 | 0.08 |
| | Heating time | sec | 10 | 10 | 15 | 15 | 10 | 15 | 10 |
| | Bulk density | kg/m$^3$ | 20.0 | 20.6 | 18.9 | 23.3 | 21.0 | 19.0 | 23.0 |
| | Bulk ratio | times | 46.3 | 44.9 | 49.0 | 39.7 | 45.0 | 48.0 | 41.0 |
| | Average cell diameter | μm | 241 | 135 | 155 | 230 | 90 | 220 | 212 |
| | Closed cell content | % | 81 | 85 | 95 | 93 | 93 | 96 | 91 |
| | Heat of high temperature peak | J/g | 14.8 | 24.9 | 32.0 | 28.9 | 30.0 | 19.0 | 19.6 |
| Evaluation of moldability (Molding without pressurization) | Moldable range | MPa (G) | None | None | 0.11 to 0.13 | 0.11 | None | 0.10 to 0.11 | None |
| | Evaluation | - | 0 | 0 | 3 (high) | 1 | 0 | 2 | 0 |

EP 4 400 538 A1

18

(continued)

| Comparative Example No. | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Molded article | Molding pressure | MPa(G) | | | 0.11 | 0.11 | | 0.10 | |
| | Density of molded article | kg/m$^3$ | | | 23.7 | 28.5 | | 26.6 | |
| | Tensile strength S | MPa | | | 0.24 | 0.25 | | 0.30 | |
| | Tensile elongation E | % | | | 24 | 24 | | 32 | |
| | S × E | MPa•% | Not evaluated | Not evaluated | 5.9 | 6.1 | Not evaluated | 9.4 | Not evaluated |
| | Compressive stress at 50% strain | kPa | | | 125 | 130 | | 110 | |
| | Density of cut-out molded article | kg/m$^3$ | | | 22.8 | 23.5 | | 24.7 | |
| | Evaluation of surface smoothness | - | | | A | B | | B | |

EP 4 400 538 A1

As can be seen from Table 1 to Table 3, the expanded beads of Examples 1 to 4 make it possible to produce expanded beads molded articles having high flexibility and excellent surface smoothness under excellent molding conditions. Specifically, the expanded beads of Examples 1 to 4 have a relatively small average cell diameter, and therefore molded articles having high flexibility and excellent surface smoothness can be produced. Further, the values of physical properties of the linear low-density polyethylenes are within predetermined ranges, and therefore the expanded beads are excellent in moldability even when having such a relatively small average cell diameter as described above.

Further, as shown in Fig. 3, observation of Examples and Comparative Examples indicates that, in a range where ΔH1 was 80 J/g or more, expanded beads molded articles having high flexibility could be produced under more excellent molding conditions in an area above a straight line representing Tm = 0.2 × ΔH1 + 102 (i.e., in a region satisfying the formula (I)).

In Comparative Example 1, the melting point of the linear low-density polyethylene is too low. Therefore, recoverability after molding was bad and moldability was poor. As shown in Table 1, an acceptable product could not be obtained by molding at a molding pressure in the range of 0.07 to 0.13 MPa (G), that is, moldability was bad. It should be noted that in Comparative Example 1, as described above, moldability was bad in spite of the fact that the average cell diameter of the expanded beads was sufficiently large.

In Comparative Example 2, the MFR and heat of fusion of the linear low-density polyethylene are too large. Therefore, an acceptable product could not be obtained by molding at a molding pressure in the range of 0.07 to 0.13 MPa (G), that is, moldability was bad.

In Comparative Example 3, the heat of fusion of the linear low-density polyethylene is too large. Therefore, a molding pressure required to obtain an acceptable product was high. Further, flexibility of the molded article was also poor.

In Comparative Example 4, the MFR and heat of fusion of the linear low-density polyethylene are too large. Therefore, the moldable range was narrow, and moldability was poor. Further, flexibility of the molded article was also poor. Further, the average cell diameter of the expanded beads was too large, and therefore the surface smoothness of the molded article was low.

Comparative Example 5 is a case where the same linear low-density polyethylene as used in Comparative Example 4 is used while the expanded beads have a smaller average cell diameter. Since the cell diameter was smaller than that of Comparative Example 4, moldability further deteriorated. Therefore, an acceptable product could not be obtained by molding at a molding pressure in the range of 0.07 to 0.13 MPa (G).

Comparative Example 6 is a case where expanded beads having a large average cell diameter were produced using the same linear low-density polyethylene as used in Example 1. In Comparative Example 6, the average cell diameter of the expanded beads was too large, and therefore surface smoothness was poor. Further, flexibility of the molded article slightly deteriorated.

In Comparative Example 7, the heat of fusion of the linear low-density polyethylene was too low, and therefore an acceptable product could not be obtained by molding at a molding pressure in the range of 0.07 to 0.13 MPa (G) in spite of the fact that the average cell diameter of the expanded beads was large.

**Claims**

1. A polyethylene-based resin expanded bead comprising:

   non-crosslinked linear low-density polyethylene as a base resin, wherein
   the linear low-density polyethylene has a density of 0.915 g/cm$^3$ or more and less than 0.930 g/cm$^3$,
   the linear low-density polyethylene has a heat of fusion ΔH1 of 80 J/g or more and 100 J/g or less,
   the linear low-density polyethylene has a melting point Tm of 120°C or higher and 130°C or lower,
   the linear low-density polyethylene has a melt flow rate of 0.8 g/10 min or more and 1.5 g/10 min or less as measured under conditions of a temperature of 190°C and a load of 2.16 kg, and
   an average cell diameter of the expanded beads is 50 μm or more and 180 μm or less.

2. The polyethylene-based resin expanded bead according to claim 1, wherein the heat of fusion ΔH1 of the linear low-density polyethylene and the melting point Tm of the linear low-density polyethylene satisfy a relationship represented by the following formula (I):

$$\text{Tm} > 0.2 \times \Delta\text{H1} + 102 \cdots \text{(I)}$$

3. The polyethylene-based resin expanded bead according to claim 1 or 2, wherein the linear low-density polyethylene contains, as a main component, linear low-density polyethylene obtained by polymerization using a metallocene-based polymerization catalyst.

4. The polyethylene-based resin expanded bead according to any one of claims 1 to 3, wherein the linear low-density polyethylene contains, as a main component, linear low-density polyethylene that is a copolymer of ethylene and an $\alpha$-olefin having 6 to 8 carbon atoms.

5. The polyethylene-based resin expanded bead according to any one of claims 1 to 4, wherein in heat-flux differential scanning calorimetry of the expanded beads, a first DSC curve obtained by heating the expanded bead from 30°C to 200°C at a heating rate of 10°C/min has an intrinsic peak that is a melting peak intrinsic to the base resin and a high-temperature peak that is a melting peak appearing on a higher temperature side in comparison with the intrinsic peak, and a heat of fusion at the high-temperature peak is 15 J/g or more and 50 J/g or less.

6. The polyethylene-based resin expanded bead according to any one of claims 1 to 5, wherein a bulk density of the expanded beads is 10 to 30 kg/m$^3$.

7. A method for producing a polyethylene-based resin expanded bead, the method comprising:

   a dispersing step in which polyethylene-based resin particles using non-crosslinked linear low-density polyethylene as a base resin are dispersed in a dispersion medium in a sealed container;
   a blowing agent impregnating step in which the resin particles are impregnated with an inorganic physical blowing agent in the sealed container; and
   an expanding step in which the resin particles impregnated with the blowing agent are released from the sealed container into an atmosphere having a pressure lower than an internal pressure of the sealed container to expand the resin particles, wherein
   the linear low-density polyethylene has a density of 0.915 g/cm$^3$ or more and less than 0.930 g/cm$^3$,
   the linear low-density polyethylene has a heat of fusion of 80 J/g or more and 100 J/g or less,
   the linear low-density polyethylene has a melting point of 120°C or higher and 130°C or lower, and
   the linear low-density polyethylene has a melt flow rate of 0.8 g/10 min or more and 1.5 g/10 min or less as measured under conditions of a temperature of 190°C and a load of 2.16 kg.

FIG. 1

FIG. 2

FIG. 3

$$Tm = 0.2 \times \Delta H1 + 102$$

Legend:
- ● PE1
- ◆ PE2
- ○ PE3
- + PE4
- ◇ PE5
- ✳ PE6
- □ PE7
- △ PE8
- ▲ PE9

X-axis: HEAT OF FUSION $\Delta H1$ (J/g)
Y-axis: MELTING POINT $Tm$ (°C)

## INTERNATIONAL SEARCH REPORT

| International application No. |
|---|
| **PCT/JP2022/034281** |

**A. CLASSIFICATION OF SUBJECT MATTER**

*C08J 9/18*(2006.01)i
FI: C08J9/18 CES

According to International Patent Classification (IPC) or to both national classification and IPC

**B. FIELDS SEARCHED**

Minimum documentation searched (classification system followed by classification symbols)

C08J9/00-9/42; B29C44/00-44/60; B29C67/20; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 62-15239 A (KANEGAFUCHI KAGAKU KOGYO KABUSHIKI KAISHA) 23 January 1987 (1987-01-23)<br>claims 1, 3, p. 3, upper right column, line 19 to lower right column, line 1, p. 6, upper right column, lines 3-10, p. 7, table 1, example 7 | 1-7 |
| A | JP 7-216153 A (SUMITOMO CHEM CO LTD) 15 August 1995 (1995-08-15)<br>claim 1, paragraph [0014] | 1-7 |
| A | WO 2016/158686 A1 (KANEKA CORPORATION) 06 October 2016 (2016-10-06)<br>claim 1, paragraphs [0020]-[0023], [0042], [0044]-[0046], [0065], [0079], [0088]-[0093], example 1 | 1-7 |
| A | JP 10-147661 A (KANEGAFUCHI KAGAKU KOGYO KABUSHIKI KAISHA) 02 June 1998 (1998-06-02)<br>claims 1, 3, paragraphs [0016], [0019], [0030], [0037], [0041] | 1-7 |
| A | JP 2-043206 A (JSP CORP) 13 February 1990 (1990-02-13)<br>claims, p. 3, upper left column, line 2 to lower right column, line 16, example 1 | 1-7 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2022/034281** |

**C.    DOCUMENTS CONSIDERED TO BE RELEVANT**

| Category* | Citation of document, with indication, where appropriate, of the relevant passages | Relevant to claim No. |
|---|---|---|
| E, A | JP 2022-141166 A (JSP CORP) 29 September 2022 (2022-09-29)<br>claim 1, table 2, comparative examples 7, 9 | 1-7 |

Form PCT/ISA/210 (second sheet) (January 2015)

## INTERNATIONAL SEARCH REPORT
### Information on patent family members

International application No.

**PCT/JP2022/034281**

| Patent document cited in search report | | | Publication date (day/month/year) | Patent family member(s) | Publication date (day/month/year) |
|---|---|---|---|---|---|
| JP | 62-15239 | A | 23 January 1987 | US 4778829 A claims 1-3, column 2, line 66 to column 3, line 48, example 7 | |
| JP | 7-216153 | A | 15 August 1995 | (Family: none) | |
| WO | 2016/158686 | A1 | 06 October 2016 | US 2017/0362403 A1 claim 1, paragraphs [0026]-[0030], [0053], [0055]-[0057], [0076], [0092], [0114]-[0120], example 1 | |
| JP | 10-147661 | A | 02 June 1998 | (Family: none) | |
| JP | 2-043206 | A | 13 February 1990 | (Family: none) | |
| JP | 2022-141166 | A | 29 September 2022 | (Family: none) | |

Form PCT/ISA/210 (patent family annex) (January 2015)

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7039501 B
- JP 6192464 A
- WO 2013031745 A1
- WO 2014042189 A1
- WO 2015076306 A1
- JP S4638359 B
- JP S5122951 B
- JP H0446217 B
- JP H0649795 B
- JP H0622919 B